# EUROPÄISCHE PATENTSCHRIFT

(11) **EP 1 351 576 B1**
(45) Veröffentlichungstag und Bekanntmachung des Hinweises auf die Patenterteilung: **22.02.2006**
(21) Anmeldenummer: 02716063.9
(22) Anmeldetag: 05.01.2002
(51) Int. Cl.: A22C 13/00

(54) **HÜLLGEWEBE FÜR WURSTWAREN OD. DGL.**
WOVEN CASING FOR SAUSAGES OR SIMILAR PRODUCTS
ENVELOPPE DE TISSU POUR SAUCISSES OU PRODUITS SIMILAIRES

(30) Priorität: 09.01.2001 DE 20100346 U
(43) Veröffentlichungstag der Anmeldung: 15.10.2003
(73) Patentinhaber: Litwak, Marian, 58093 Hagen (DE); Flader, Carsten, 45768 Marl (DE)
(72) Erfinder: FLADER, Carsten, 45768 Marl (DE)
(74) Vertreter: Meinke, Dabringhaus und Partner GbR
(86) Internationale Anmeldenummer: PCT/EP2002/000052
(87) Internationale Veröffentlichungsnummer: WO 2002/054877

(56) Entgegenhaltungen:
- EP-A- 0 962 148
- DE-A- 3 543 633
- DE-A- 3 930 834
- DE-C- 880 870
- FR-A- 1 102 854

## Beschreibung

Die Erfindung richtet sich auf ein Verfahren zur Erzeugung von Hüllen für Wurstwaren, insbesondere von luftgetrockneten Wurstwaren.

Es ist bekannt, Wurstwaren in Naturdärmen vom Rind, vom Schwein oder vom Schaf zuzubereiten. Dabei werden die Därme gereinigt, von der Schleimhaut befreit, getrocknet, gesalzen und weiter aufbereitet, wobei die begehrtesten Naturdärme von jungen Schafen als sogenannte Saitlinge im Markt vorhanden sind.

Preiswertere Produkte werden in Kunstdärmen hergestellt, wobei hier sehr unterschiedliche Materialien zum Einsatz kommen. Ein Problem der Kunstdärme besteht u.a. darin, daß sie Collagene enthalten, die aus tierischen Substanzen stammen, wobei bei der derzeitigen Problematik durch BSE ausgelöst diese Substanzen vom Endverbraucher nicht nur in der Wurstmasse selbst, sondern auch in der ggf. zum Verzehr bestimmten Hülle nicht gewünscht sind.

Aus der DE-OS 40 37 055-A1 ist beispielsweise eine mehrschichtige Wursthülle bekannt aus einem Faservlies und einer zusätzlichen Innenschicht aus Naturfasern oder modifizierten Naturfasern aber auch aus Kunststoffäden, wobei eine vergleichbare mehrschichtige Wursthülle auch in der DE-41 23 745-A1 beschrieben ist, wiederum aus einer Innenschicht, einem Vlies und einem Kleber. Aus DE-3 930 834 ist ein Verfahren zur Herstellung eines Hüllgewebes aus Rohseide bekannt. Die Aufgabe der Erfindung besteht demgegenüber darin, ein Hüllgewebe für Wurstwaren od. dgl. insbesondere für luftgetrocknete.Wurstwaren zu schaffen, welches zum einen aus BSE-freien Materialien besteht und nach heutiger Erkenntnis für Menschen unbedenklich ist und einfach hergestellt und unterschiedlichen Veredelungsschritten unterworfen werden kann.

Mit einem Verfahren der eingangs bezeichneten Art wird diese Aufgabe gemäß der Erfindung dadurch gelöst, daß zunächst Schläuche aus Rohseide, erzeugt werden, die Rohseidenschläuche in einem flüssigen Trennmittel getränkt und anschließend die getränkten Rohseidenschläuche getrocknet werden, wobei ein erfindungsgemäßes Hüllgewebe sich dadurch auszeichnet, daß es aus einem Rohseidegewebe mit einer lebensmittelunbedenklichen Trennmittelbenetzung der Gewebefasern gebildet und mit der Wurstrohmasse gefüllt ist.

Es hat sich gezeigt, daß derartige Rohseide-Gewebe schadstofffrei herstellbar sind und mit einer lebensmittelunbedenklichen Trennmittelbeschichtung insbesondere zur Herstellung hochwertiger Wurstwaren geeignet sind, aber auch zur Herstellung anderer Lebensmittel, z.B. von Käse.

Ausgestaltungen der Erfindung ergeben sich aus den Unteransprüchen. Verfahrensgemäß ist dabei vorgesehen, daß zur Benetzung der einzelnen Rohseidenfäden der Rohseidenschläuche eine Emulsion aus MCT-Öl (Multi-Chain-Triglycerin-Öl) mit Wasser und einem Emulgator (E 471) eingesetzt wird.

Die erfindungsgemäße Beschichtung bildet erkennbar keine durchgehende Trennschicht mit den damit verbundenen Problemen der Luft- und Wasserdurchlässigkeit, sondern benetzt die Rohseidenfäden bzw. das daraus hergestellte Gewebe so, daß es in jedem Falle luft- und feuchtigkeitsdurchlässig bleibt, was insbesondere bei luftgetrockneten Produkten von großer Bedeutung ist.

Die Rohseide kann auch gefärbt.werden, um den Wünschen der Verbraucher näher zu kommen, ein besonderer Vorteil besteht erfindungsgemäß auch darin, daß die Rohseidenschläuche vor dem Füllen einer Impfung mit Edelschimmel unterworfen werden können, um so sehr hochwertige Edelschimmelprodukte herstellen zu können.

Das erfindungsgemäße Hüllgewebe kann in Ausgestaltung sich auch dadurch auszeichnen, daß die Rohseide mit einer Triglycerin-Ölbeschichtung ausgerüstet ist.

Die Beschichtung der Rohseide kann erfindungsgemäß in weiterer Ausgestaltung aus einem Gemisch aus einem MCT-Öl (Multi-Chain-Triglycerin-Öl) und einem Monodiglyzeridesther (E 471) gebildet sein, wobei im Gemisch ebenfalls Wasser vorhanden ist. Das MCT-Öl wird beispielsweise auch in der Backindustrie als Trennmittel für Backformen eingesetzt und ist lebensmitteltechnisch für den menschlichen Verzehr unbedenklich.

Das erfindungsgemäße Gemisch der Trennmittelbeschichtung kann dabei aus etwa 10 % MCT-Öl, 5 %.Monodiglyzeridesther als Emulgator und der Rest aus Wasser gebildet sein, wie die Erfindung in weiterer Ausgestaltung ebenfalls vorsieht.

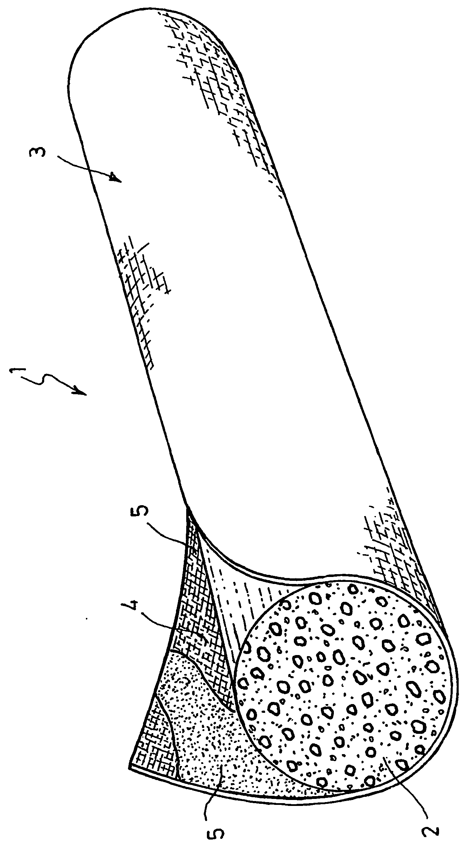

Weitere Merkmale, Einzelheiten und Vorteile der Erfindung ergeben sich aufgrund der nachfolgenden Beschreibung sowie anhand der Zeichnung. Diese zeigt in vereinfachter, stark schematisierter Darstellung eine schlauchförmige Wursthülle nach der Erfindung.

Die allgemein mit 1 bezeichnete Wurst ist entsprechend der Wurstsorte, z.B, als Salami, gefüllt, die Wurstfüllung selbst ist mit 2 bezeichnet. Die Wurstfüllung ist von einer allgemein mit 3 bezeichneten Hülle umgeben, die zur einfacheren Beschreibung im linken Figurenbereich geöffnet dargestellt ist.

Die Hülle 3 wird von einem mit 4 bezeichneten Rohseide-Gewebe gebildet, welches wenigstens auf seiner Innenseite mit einer allgemein mit 5 bezeichneten, ausrißweise dargestellten Trennmittelbeschichtung versehen ist. Die von der Trennmittelschicht 5 freien Bereiche des aufgeklappten Folienbereiches in der Figur sind aus Darstellungsgründen so wiedergegeben, in der Praxis ist die gesamte Innenfläche des Rohseide-Gewebes 4 mit der Trennmittelbeschichtung 5 versehen, beispielsweise einer Triglycerid-Ölbeschichtung.

Die Hülle 3 kann auch zu anderen Zwecken als der reinen Herstellung hochwertiger Wurstwaren benutzt werden. So beispielsweise um eine Rohkäsemasse aufzunehmen, um den Vorverkäsungsprozeß in der Hülle durchzuführen, in einem Zwischenstadium kann dann die Hüllfolie 4 vom Käsekörper abgenommen und die weitere Verkäsung vorgenommen werden, um nur ein Beispiel zu nennen.

Natürlich ist das beschriebene Ausführungsbeispiel-der Erfindung noch in vielfacher Hinsicht abzuändern, ohne den Grundgedanken zu verlassen. So kann die Folie nicht nur in der hier dargestellten darmähnlichen Schlauchform vorgesehen sein, sie kann mit einer Naht versehen sein, als Rundwirkware hergestellt sein, als Folie in flächiger Ausgestaltung u. dgl. mehr.

## Patentansprüche

1. Verfahren zur Erzeugung eines luft- und wasserdurchlässigen Hüllgewebes für Wurstwaren od. dgl., insbesondere von luftgetrockheten Wurstwaren,
**dadurch gekennzeichnet,**
**daß** zunächst Schläuche (3) aus Rohseide erzeugt werden, die Rohseidenschläuche (3) in einem flüssigen Trennmittel getränkt und anschließend die getränkten Rohseidenschläuche getrocknet werden, wobei zur Benetzung der einzelnen Rohseidenfäden der Rohseidenschläuche (3) eine Emulsion aus MCT-Öl, Multi-Chain-Triglycerin-Öl, mit Wasser und einem Emulgator, E 471, eingesetzt wird.

2. Verfahren nach Anspruch 1,
**dadurch gekennzeichnet,**
**daß** die eingesetzte Rohseide und/oder die erzeugten Rohseidenschläuche (3) einer Färbestufe mit lebensmittelunbedenklicher Textilfarbe unterworfen werden.

3. Verfahren nach Anspruch 1 oder 2,
**dadurch gekennzeichnet,**
**daß** die Rohseidenschläuche (3) vor dem Füllen einer Impfung mit Edelschimmel unterworfen werden.

## Claims

1. Process for producing an air- and water-permeable fibrous casing for sausages or similar, in particular for air-dried sausages,
**characterized in that**
tubes (3) made of raw silk are firstly produced,
the raw-silk tubes (3) are steeped in a liquid parting agent and then the soaked raw-silk tubes are dried, an emulsion of MCT-oil, multi-chain triglycerol oil with water and an emulsifier, E 471 being used for wetting the individual raw-silk threads of the raw-silk tubes (3).

2. Process according to claim 1,
**characterized in that**
the raw silk and/or the produced raw-silk tubes (3) are subjected to a dyeing stage with textile dye approved for food use.

3. Process according to claim 1 or 2,
**characterized in that**
the raw-silk tubes (3) are subjected to an inoculation with mould before filling.

## Revendications

1. Procédé pour la production d'une enveloppe de tissu perméable à l'air et à l'eau pour saucisses ou produits similaires, en particulier pour saucisses séchées à l'air,
**caractérisé en ce que**,
l'on produit d'abord des tubes souples (3) en soie brute,
les tubes souples en soie brute (3) sont trempés dans un agent de séparation liquide et ensuite, les tubes souples en soie brute trempés sont séchés, tandis que pour le mouillage des différents fils de soie brute des tubes souples en soie brute (3), on utilise une émulsion d'huile MCT, une huile de triglycérine à chaînes multiples, avec de l'eau et un émulsifiant, E 471.

2. Procédé selon la revendication 1,
**caractérisé en ce que**,
la soie brute utilisée et/ou les tubes souples de soie brute (3) réalisés sont soumis à une étape de teinture au moyen d'un colorant textile sans danger pour les produits alimentaires.

3. Procédé selon la revendication 1 ou 2,
**caractérisé en ce que**,
les tubes souples de soie brute (3) reçoivent une inoculation de moisissure noble avant le remplissage.
